# EUROPEAN PATENT APPLICATION

(11) **EP 2 306 742 A2**
(43) Date of publication of application: **06.04.2011**
(21) Application number: 10176660.8
(22) Date of filing: 14.09.2010
(51) Int. Cl.: H04N 13/00, H04N 7/26

(54) **Image signal processing apparatus, image signal processing method, image display apparatus, image display method, program, and image display system**

(30) Priority: 02.10.2009 JP 2009230874
(71) Applicant: Sony Corporation, Minato-ku Tokyo 108-0075 (JP)
(72) Inventor: Ishikawa, Hirotaka, Minato-ku, Tokyo 108-0075 (JP); Ito, Katsuhisa, Minato-ku, Tokyo 108-0075 (JP); Yasunaga, Hiroaki, Minato-ku, Tokyo 108-0075 (JP)
(74) Representative: Turner, James Arthur

(57) **Abstract**

An image signal processing apparatus that supplies entire circumferential viewpoint images including plural viewpoint images respectively corresponding to plural viewpoints provided on a circumference around a subject to an image display apparatus that displays a stereoscopic image of the subject seen from an entire circumference, includes: arranging means for arranging the input entire circumferential viewpoint images in a time-series sequence by regarding corresponding differences in viewpoints as differences in an imaging sequence; and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals.

## Description

The present invention relates to an image signal processing apparatus, an image signal processing method, an image display apparatus, an image display method, a program, and an image display system, preferably (though not exclusively) used when a stereoscopic image of a subject is displayed, for example.

In related art, there have been technologies of displaying images that can be stereoscopically viewed on a flat display employed in a television receiver or the like. The technology may use disparity of right and left eyes of a person who watches the display. Specifically, for example, an image for the left eye and an image for the right eye are displayed on the same flat display and viewed through a polarizing filter for the left eye to see only the image for the left eye and the right eye to see only the image for the right eye, and thereby, a stereoscopic view is realized.

On the other hand, many entire circumference stereoscopic image display apparatuses that can display a stereoscopic image over the entire circumference of a subject using plural images at different viewpoints (hereinafter, referred to as "viewpoint images") imaged from plural viewpoints provided on a circumference around the subject (or generated on the assumption of the states of the subject seen from the entire circumference by computer graphics) have been proposed. (see JP-A-2004-177709 or JP-2005-114771).

The entire circumference stereoscopic image display apparatuses are adapted to have their display units in cylindrical shapes and display images stereoscopically visible for a user who watches the side surface of the cylindrical shape from an arbitrary direction.

As described above, entire circumferential viewpoint images are input to the entire circumference stereoscopic image display apparatus, and the data volume is enormous. Accordingly, it is conceivable that the entire circumferential viewpoint images are encoded and input to the entire circumference stereoscopic image display apparatus and decoded and displayed in the entire circumference stereoscopic image display apparatus.

However, under the present circumstances, a method of efficiently encoding the entire circumferential viewpoint images is not established.

Thus, it is desirable to establish a method of efficiently encoding entire circumferential viewpoint images of a subject for efficient input of the entire circumferential viewpoint images of the subject to an entire circumference stereoscopic image display apparatus.

Various respective aspects and features of the invention are defined in the appended claims. Combinations of features from the dependent claims may be combined with features of the independent claims as appropriate and not merely as explicitly set out in the claims.

A first embodiment of the invention is directed to an image signal processing apparatus that supplies entire circumferential viewpoint images including plural viewpoint images respectively corresponding to plural viewpoints provided on a circumference around a subject to an image display apparatus that displays a stereoscopic image of the subject seen from an entire circumference, including: arranging means for arranging the input entire circumferential viewpoint images in a time-series sequence by regarding corresponding differences in viewpoints as differences in an imaging sequence; and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals.

The image signal processing apparatus in the first embodiment of the invention may further includes control means for controlling the encoding means for encoding the viewpoint images using the encoding method including at least inter-frame prediction by identifying a pattern of frames with high correlations of the respective viewpoint images arranged in the time-series sequence by regarding the differences in viewpoints as differences in the imaging sequence based on parameters representing relative movement of the subject relative to the viewpoints and giving notification of the identified pattern.

The image signal processing apparatus in the first embodiment of the invention further includes estimating means for estimating parameters representing the relative movement of the subject relative to the viewpoints based on the respective viewpoint images arranged in the time-series sequence by regarding the differences in viewpoints as differences in the imaging sequence, and giving notification of the estimated parameters to the control means.

The first embodiment of the invention is also directed to an image signal processing method of an image signal processing apparatus that supplies entire circumferential viewpoint images including plural viewpoint images respectively corresponding to plural viewpoints provided on a circumference around a subject to an image display apparatus that displays a stereoscopic image of the subject seen from an entire circumference, including the steps of: by the image signal processing apparatus, arranging the input entire circumferential viewpoint images in a time-series sequence by regarding corresponding differences in viewpoints as differences in an imaging sequence; and treating the respective viewpoint images arranged in the time-series sequence by regarding the differences in viewpoints as differences in the imaging sequence as single frames and encoding the viewpoint images using an encoding method including at least inter-frame prediction to generate video encoded signals.

The first embodiment of the invention is also directed to a control program of an image signal processing apparatus that supplies entire circumferential viewpoint images including plural viewpoint images respectively corresponding to plural viewpoints provided on a circumference around a subject to an image display apparatus that displays a stereoscopic image of the subject seen from an entire circumference, the program allows a computer of the image signal processing apparatus to execute processing including the steps of: arranging the input entire circumferential viewpoint images in a time-series sequence by regarding corresponding differences in viewpoints as differences in an imaging sequence; and treating the respective viewpoint images arranged in the time-series sequence by regarding the differences in viewpoints as differences in the imaging sequence as single frames and encoding the viewpoint images using an encoding method including at least inter-frame prediction to generate video encoded signals.

In the first embodiment of the invention, the input entire circumferential viewpoint images are arranged in the time-series sequence by regarding corresponding differences in viewpoints as differences in the imaging sequence, the arranged respective viewpoint images are treated as single frames, the viewpoint images are encoded using the encoding method including at least inter-frame prediction, and thereby, the video encoded signals are generated.

A second embodiment of the invention is directed to an image display apparatus that displays a stereoscopic image of a subject seen from an entire circumference based on video encoded signals input from an image signal processing apparatus including arranging means for arranging entire circumferential viewpoint images including plural viewpoint images respectively corresponding to plural viewpoints provided on a circumference around the subject in a time-series sequence by regarding corresponding differences in viewpoints as differences in an imaging sequence, and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals, including: decoding means for decoding the video encoded signals input from the image signal processing apparatus and reproducing the entire circumferential viewpoint images; and display control means for allowing a display to display the reproduced entire circumferential viewpoint images.

The second embodiment of the invention is also directed to an image display method of an image display apparatus that displays a stereoscopic image of a subject seen from an entire circumference based on video encoded signals input from an image signal processing apparatus including arranging means for arranging entire circumferential viewpoint images including plural viewpoint images respectively corresponding to plural viewpoints provided on a circumference around the subject in a time-series sequence by regarding corresponding differences in viewpoints as differences in an imaging sequence, and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals, including the steps of: by the image display apparatus, decoding the video encoded signals input from the image signal processing apparatus and reproducing the entire circumferential viewpoint images; and allowing a display to display the reproduced entire circumferential viewpoint images.

The second embodiment of the invention is also directed to a control program of an image display apparatus that displays a stereoscopic image of a subject seen from an entire circumference based on video encoded signals input from an image signal processing apparatus including arranging means for arranging entire circumferential viewpoint images including plural viewpoint images respectively corresponding to plural viewpoints provided on a circumference around the subject in a time-series sequence by regarding corresponding differences in viewpoints as differences in an imaging sequence, and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals, the program allows a computer of the image display apparatus to execute processing including the steps of: the decoding step of decoding the video encoded signals input from the image signal processing apparatus and reproducing the entire circumferential viewpoint images; and the display control step of allowing a display to display the reproduced entire circumferential viewpoint images.

In the second embodiment of the invention, the video encoded signals input from the image signal processing apparatus are decoded and the entire circumferential viewpoint images are reproduced, and the reproduced entire circumferential viewpoint images are displayed on the display.

A third embodiment of the invention is directed to an image display system including: an image display apparatus that displays a stereoscopic image of a subject seen from an entire circumference; and an image signal processing apparatus that supplies entire circumferential viewpoint images including plural viewpoint images respectively corresponding to plural viewpoints provided on a circumference around the subject to the image display apparatus, wherein the image signal processing apparatus includes arranging means for arranging the input entire circumferential viewpoint images in a time-series sequence by regarding corresponding differences in viewpoints as differences in an imaging sequence, and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals, and wherein the image display apparatus includes decoding means for decoding the video encoded signals input from the image signal processing apparatus and reproducing the entire circumferential viewpoint images, and display control means for allowing a display to display the reproduced entire circumferential viewpoint images.

In the third embodiment of the invention, by the image signal processing apparatus, the input entire circumferential viewpoint images are arranged in the time-series sequence by regarding corresponding differences in viewpoints as differences in the imaging sequence, the arranged respective viewpoint images are treated as single frames, the viewpoint images are encoded using the encoding method including at least inter-frame prediction, and thereby, the video encoded signals are generated. Further, by the image display apparatus, the video encoded signals input from the image signal processing apparatus are decoded and the entire circumferential viewpoint images are reproduced, and the reproduced entire circumferential viewpoint images are displayed on the display.

According to the first embodiment of the invention, the entire circumferential viewpoint images of the subject can efficiently be input to the image display apparatus.

According to the second embodiment of the invention, the subject can be displayed as a stereoscopic image seen from the entire circumference based on the video encoded signals obtained by efficiently encoding the entire circumferential viewpoint images of the subject.

According to the third embodiment of the invention, the entire circumferential viewpoint images of the subject can efficiently be input to the image display apparatus, and the subject can be displayed as a stereoscopic image seen from the entire circumference.

Embodiments of the invention will now be described with reference to the accompanying drawings, throughout which like parts are referred to by like references, and in which:
Fig. 1 is a block diagram showing a configuration example of a three-dimensional image display system to which embodiments of the invention are applied.
Fig. 2 is a diagram for explanation of the case of 18 entire circumferential viewpoint images.
Fig. 3 is a diagram for explanation of a sequence in which the entire circumferential viewpoint images are arranged in a time-series sequence.
Fig. 4 shows a first correlation pattern in response to a rotation speed of a subject itself.
Fig. 5 shows a second correlation pattern in response to the rotation speed of the subject itself.
Fig. 6 shows a third correlation pattern in response to the rotation speed of the subject itself.
Fig. 7 is a diagram for explanation of a search method of the viewpoint images having high correlations.
Fig. 8 is a diagram for explanation of the search method of the viewpoint images having high correlations.
Fig. 9 is a diagram for explanation of the search method of the viewpoint images having high correlations.
Fig. 10 is a block diagram showing a configuration example of an image signal processing apparatus in Fig. 1.
Fig. 11 is a flowchart for explanation of video encoded signals by the image signal processing apparatus.
Fig. 12 is a block diagram showing a configuration example of an entire circumference stereoscopic image display apparatus in Fig. 1.
Fig. 13 is a program showing a configuration example of a computer.

Hereinafter, the best modes for implementing the invention (hereinafter, referred to as embodiments) of the invention will be explained with reference to the drawings.

### [Configuration example of three-dimensional image display system]

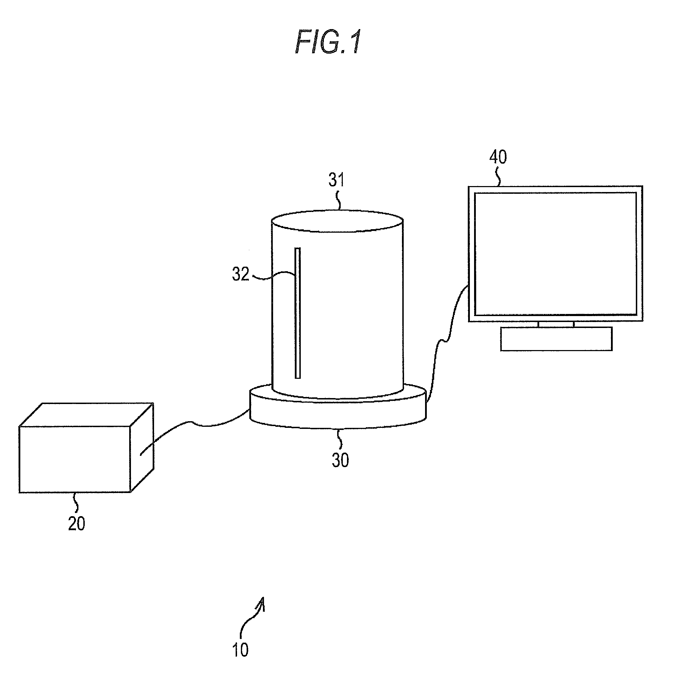

Fig. 1 shows a configuration example of a three-dimensional image display system to which embodiments of the invention are applied. The three-dimensional image display system 10 includes an image signal processing apparatus 20, an entire circumference stereoscopic image display apparatus 30, and a flat display 40.

The image signal processing apparatus 20 regards differences in viewpoints of externally input entire circumferential viewpoint images as differences in an imaging sequence, arranges the viewpoint images according to the imaging sequence, treats the respective viewpoint images as respective single frames and encodes the images, and outputs resulting video encoded signals to the entire circumference stereoscopic image display apparatus 30.

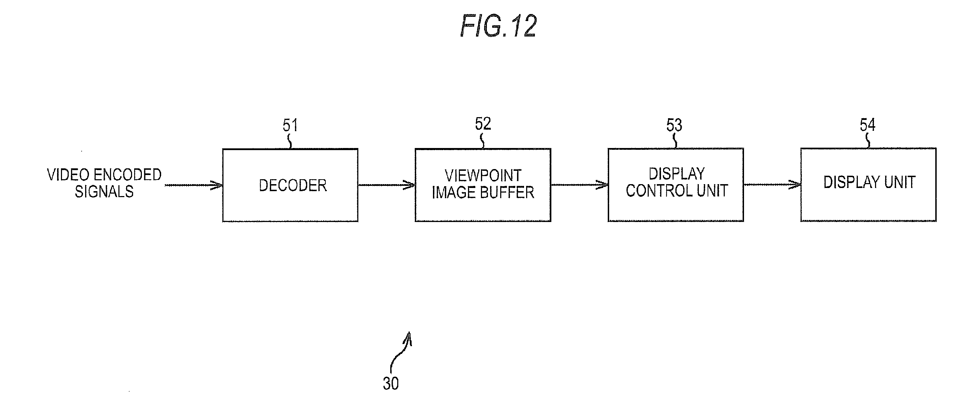

The entire circumference stereoscopic image display apparatus 30 includes a display unit 54 (Fig. 12) in a cylindrical part 31 provided with plural slits 32. The entire circumference stereoscopic image display apparatus 30 decodes the video encoded signals input from the image signal processing apparatus 20 and displays resulting entire circumferential viewpoint images on the display unit 54 in a predetermined sequence. Concurrently, the cylindrical part 31 is rotationally driven. A user who watches the side surface of the cylindrical part 31 from an arbitrary direction glimpses the images of the display unit 54 via the slit 32, and thereby, the user is able to visually recognize a stereoscopic image over the entire circumference of a subject.

Further, the entire circumference stereoscopic image display apparatus 30 supplies the entire circumferential viewpoint images obtained as the decoding result of the video encoded signals to the flat display 40. The video encoded signals may be supplied from the entire circumference stereoscopic image display apparatus 30 to the flat display 40 and decoded in the flat display 40.

Note that, to the entire circumference stereoscopic image display apparatus 30, an entire circumference stereoscopic image display apparatus that has been proposed in the commonly-owned Japanese Patent Application No. 2008-317522 may be applied.

The flat display 40 displays the entire circumferential stereoscopic images input from the image signal processing apparatus 20 via the entire circumference stereoscopic image display apparatus 30.

### [Explanation of entire circumferential stereoscopic images]

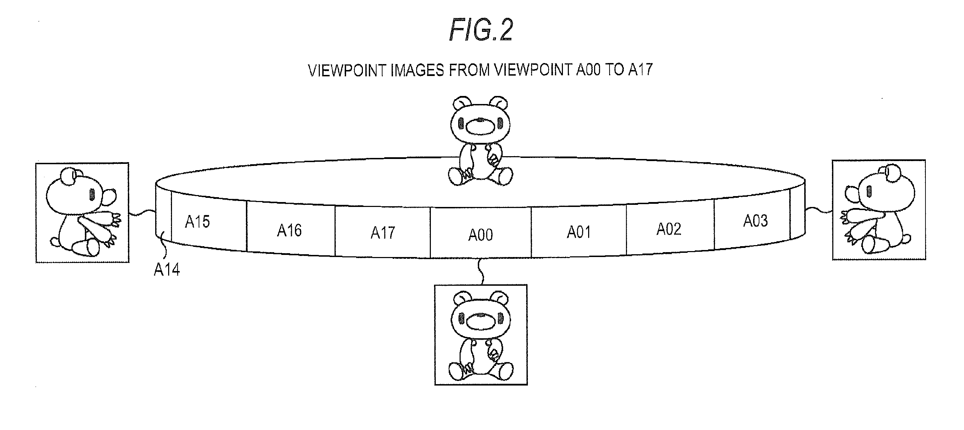

Fig. 2 shows the case where 18 viewpoints are provided by equally dividing the circumference around the subject into 18 parts and viewpoint images are obtained by simultaneously imaging the subject from the respective viewpoints. The viewpoint images may be generated not by actually imaging the subject, but by assuming the states when the subject is seen from the respective viewpoints using CG (computer graphics) or the like.

In the case of the same drawing, 18 viewpoint images are obtained at each imaging time. Here, it is assumed that, with a predetermined position (for example, in front of the subject) as reference, a viewpoint image seen from there is A00, and subsequently, viewpoint images obtained at viewpoint intervals of 20° are A01, A02, ..., A17.

The number of viewpoints provided in the entire circumference of the subject, in other words, the number of viewpoint images is not limited to 18, but may be the smaller number or the larger number. The larger the number, the smoother the stereoscopic images of the subject can be displayed.

### [Sequence in which entire circumferential viewpoint images are arranged in time-series sequence]

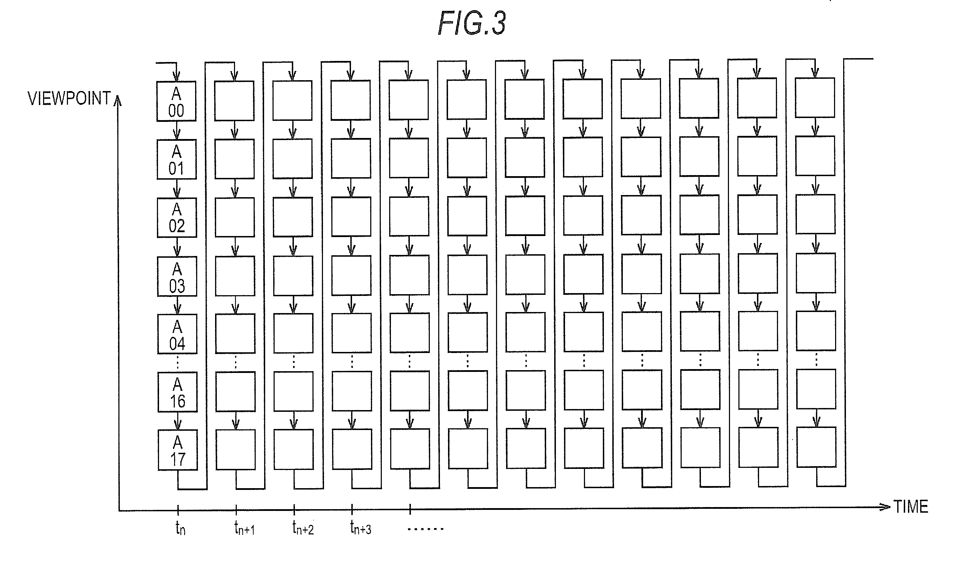

Fig. 3 shows a sequence in which 18 entire circumferential viewpoint images A00 to A17 imaged simultaneously at each imaging time are arranged in a time-series sequence. Hereinafter, 18 viewpoint images imaged simultaneously at imaging time tₙ are referred to as A00tₙ to A17tₙ, 18 viewpoint images imaged simultaneously at imaging time tₙ₊₁ and subsequent times are referred to as A00tₙ₊₁ to A17tₙ₊₁ and the like.

That is, the 18 viewpoint images A00tₙ to A17tₙ imaged simultaneously at imaging time tₙ are treated as respective single frames, and arranged in the sequence of A00tₙ, A01tₙ, ... , A17tₙ by regarding the differences in viewpoints as differences in the imaging sequence. Subsequently, the viewpoint images A00tₙ₊₁, A01tₙ₊ₗ, ... , A17tₙ₊₁ are arranged in this sequence. The subsequent images will be arranged in the same manner.

As described above, when the simultaneously imaged entire circumferential viewpoint images are treated as respective single frames and arranged by regarding the differences in viewpoints as differences in the imaging sequence, the contents of the previous and next viewpoint images are similar like general moving pictures in which frames are arranged in the sequence of imaging. Further, even in the case where the imaging times are different as in the case of the viewpoint image A17tₙ and the viewpoint image A00tₙ₊₁ if its interval is short, the contents of the images are similar.

Therefore, the respective viewpoint images arranged in the sequence shown in Fig. 3 can be converted into general video encoded signals by existing encoding methods using intra-frame prediction and inter-frame prediction (for example, MPEG2 method, H264, etc.) like general moving images.

Note that, in the case where the number of entire circumferential viewpoint images is increased as the number of viewpoints is increased, the frame rate of the resulting video encoded signals is increased and the loads of encoding processing and decoding processing become larger.

In this case, at encoding processing, the viewpoint images may be thinned and encoded, and the thinned viewpoint images may be generated by interpolation after decoding.

Alternatively, if it is possible that encoding processing and decoding processing are respectively divided into plural channels and executed in parallel, the entire circumferential viewpoint images may be divided into plural channels and processed. In this case, though the compression ratio of the viewpoint images becomes lower, the faster processing can be expected.

As described above, if the entire circumferential viewpoint images are arranged as shown in Fig. 3, they can be converted into general video encoded signals using an existing encoding method.

Note that, in the case where the subject relatively rotates, encoding can be performed at a higher compression ratio using correlations of the viewpoint images at different imaging times.

### [Correlation pattern when subject relatively rotates]

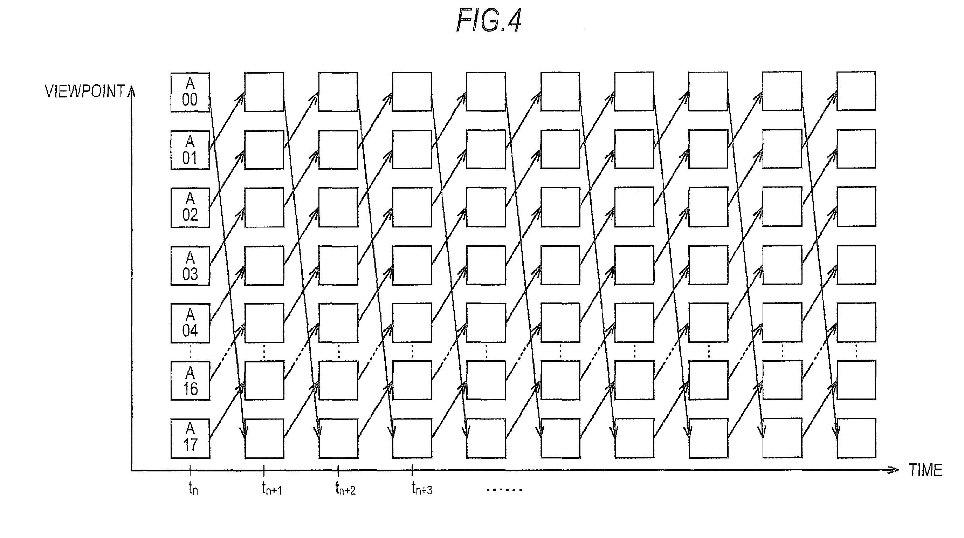

Fig. 4 shows a first correlation pattern corresponding to the case where the subject rotates rightward at a speed at which the subject relatively rotates by one viewpoint interval (in this case, 20°) between the imaging times tₙ and tₙ₊₁.

In this case, as indicated by arrows in the same drawing, correlations of the combinations of the viewpoint image A00tₙ and the viewpoint image A17tₙ₊₁, the viewpoint image A01tₙ and the viewpoint image A00tₙ₊₁, the viewpoint image A02tₙ and the viewpoint image A01tₙ₊₁, ... are high, and encoding is performed using inter-frame prediction using the frames with high correlations.

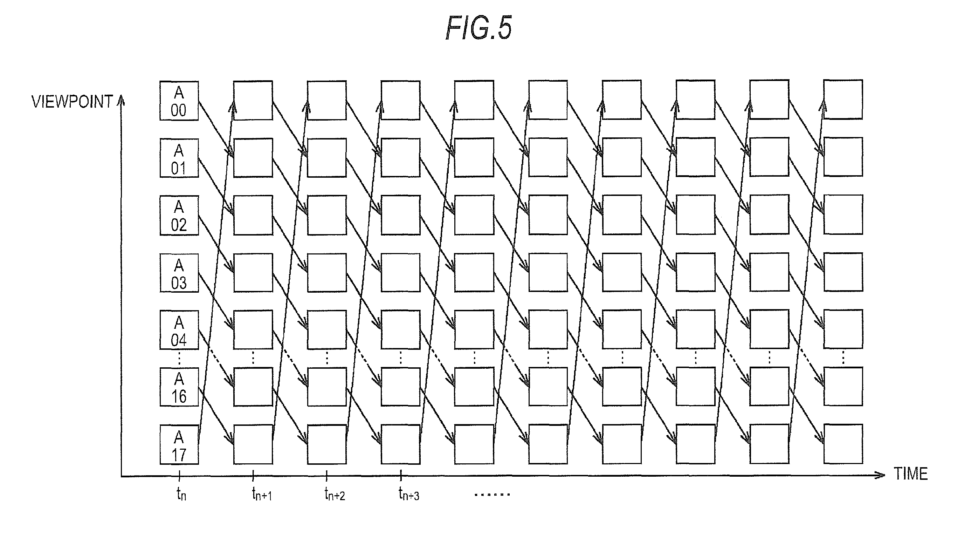

Fig. 5 shows a second correlation pattern corresponding to the case where the subject rotates leftward at a speed at which the subject relatively rotates by one viewpoint interval (in this case, 20°) between the imaging times tₙ and tₙ₊₁.

In this case, as indicated by arrows in the same drawing, correlations of the combinations of the viewpoint image A00tₙ and the viewpoint image A01tₙ₊₁, the viewpoint image A01tₙ and the viewpoint image A02tₙ₊₁, the viewpoint image A03tₙ and the viewpoint image A04tₙ₊₁, ... are high, and encoding is performed using inter-frame prediction using the frames with high correlations.

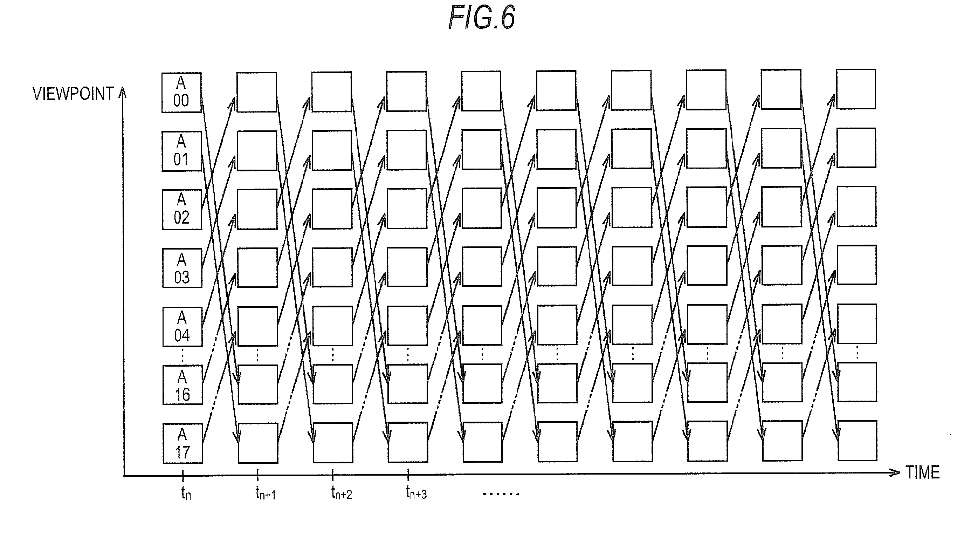

Fig. 6 shows a third correlation pattern corresponding to the case where the subject rotates rightward at a speed at which the subject relatively rotates by two viewpoint intervals (in this case, 40°) between the imaging times tₙ and tₙ₊₁.

In this case, as indicated by arrows in the same drawing, correlations of the combinations of the viewpoint image A00tₙ and the viewpoint image A16tₙ₊₁, the viewpoint image A01tₙ and the viewpoint image A17tₙ₊₁, the viewpoint image A02tₙ and the viewpoint image A00tₙ₊₁, ... are high, and encoding is performed using inter-frame prediction using the frames with high correlations.

Note that, in the case where it may be possible to acquire parameters representing the relative rotational speed of the subject and the rotational direction thereof (for example, in the case where the viewpoint images are generated by CG or the like), the correlation pattern is identified and encoding is performed as shown in Figs. 4 to 6, for example, based on the acquired parameters.

### [Search method of viewpoint images with high correlations]

Next, a method of searching for viewpoint images with high correlations in the case where it may be impossible to acquire parameters representing the rotational speed of the subject itself and the rotational direction thereof will be explained.

In the case where it may be impossible to acquire parameters representing the rotational speed of the subject itself and the rotational direction thereof, specific viewpoint images with higher correlations compared to other viewpoint images at different imaging times are searched. Further, the parameters representing the rotational speed of the subject itself and the rotational direction thereof are estimated based on the combinations of the specific viewpoint images and the searched viewpoint images, and the correlation pattern is identified and encoding is performed as shown in Figs. 4 to 6, for example, based on the estimated parameters.

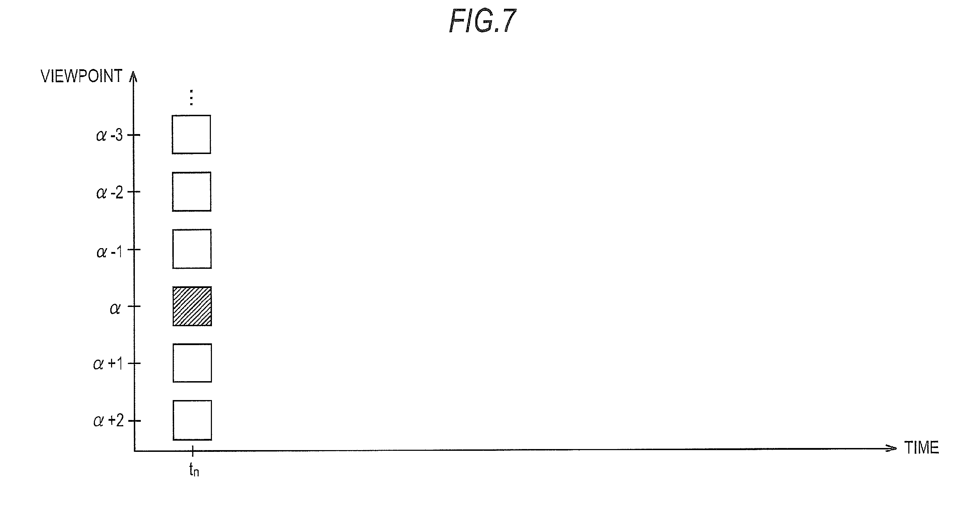

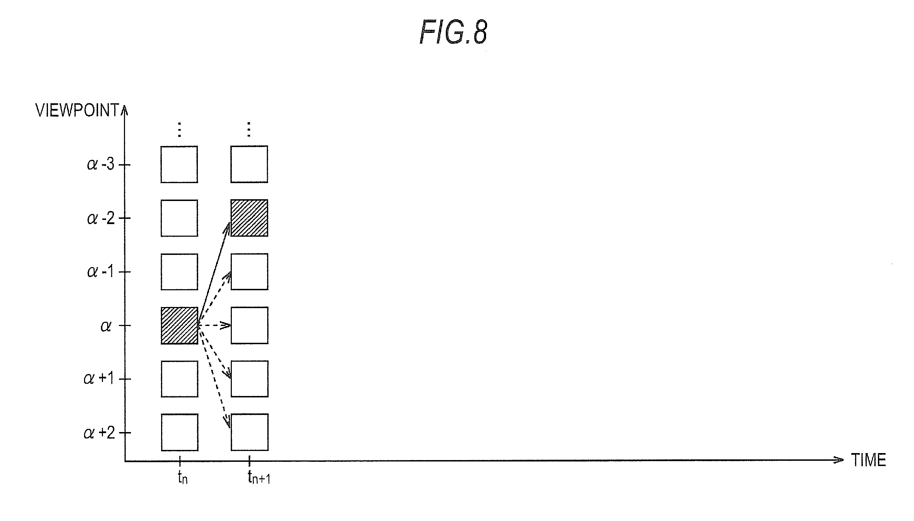

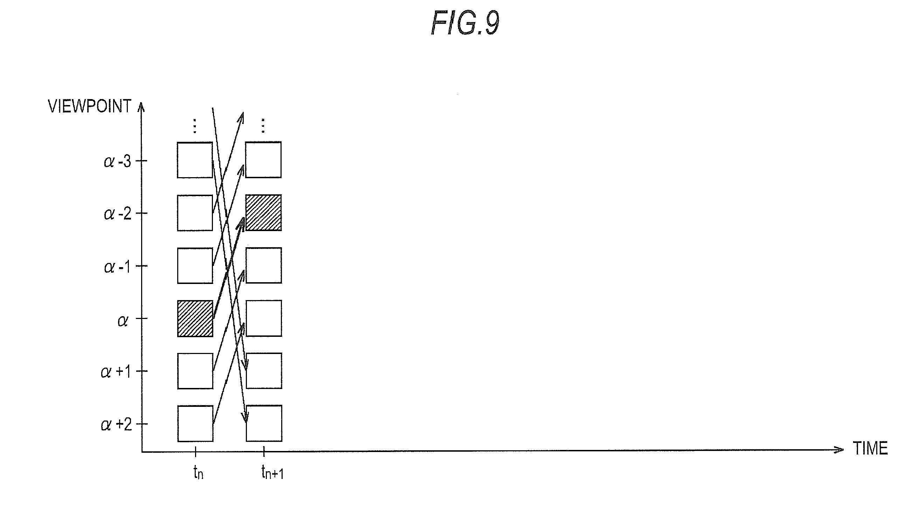

Specifically, attention is focused on a viewpoint image Aαtₙ at imaging time tₙ as shown in Fig. 7, and several viewpoint images at viewpoints near a viewpoint image Aαtₙ₊₁ at imaging time tₙ₊₁ and the viewpoint image Aαtₙ are compared as shown in Fig. 8. Then, the images having the minimum difference is specified as images with a high correlation. As shown in Fig. 8, in the case where the viewpoint image Aα-2tₙ₊₁ is specified to have the highest correlation with the viewpoint image Aαtₙ₊₁, the subject is estimated to rotate rightward at a speed at which the subject relatively rotates by two viewpoint intervals between the imaging times tₙ and tₙ₊₁. In this case, the correlation pattern is identified and encoding is performed as shown in Fig. 9.

### [Configuration example and operation of image signal processing apparatus 20]

Next, a detailed configuration example of the image signal processing apparatus 20 forming the three-dimensional image display system 10 will be explained.

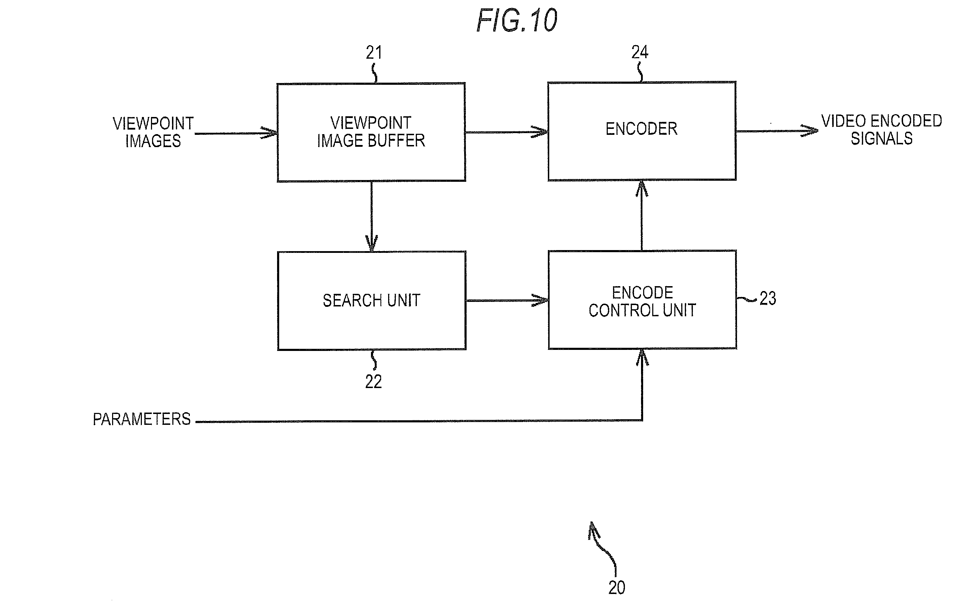

Fig. 10 shows the detailed configuration example of the image signal processing apparatus 20. The image signal processing apparatus 20 includes a viewpoint image buffer 21, a search unit 22, an encode control unit 23, and an encoder 24.

To the image signal processing apparatus 20, entire circumferential viewpoint images are externally input. Further, to the image signal processing apparatus 20, parameters representing the rotational speed of the subject itself and the rotational direction thereof at imaging are supplied. However, the parameters may not be supplied.

The viewpoint image buffer 21 buffers the sequentially and externally input entire circumferential viewpoint images, while, as shown in Fig. 3, arranges the entire circumferential viewpoint images simultaneously imaged at the respective imaging times in a time-series sequence by regarding the respective differences in viewpoints as differences in an imaging sequence.

In the case where the parameters representing the rotational speed of the subject itself and the rotational direction thereof at imaging are not supplied, the search unit 22 dynamically estimates the parameters of the rotational speed of the subject itself and the rotational direction thereof according to the method described above using Figs. 7 and 8 and outputs them to the encode control unit 23.

The encode control unit 23 dynamically controls encoding processing by the encoder 24 based on the parameters of the rotational speed of the subject itself and the rotational direction thereof externally input or input from the search unit 22. Specifically, in response to the input parameters, the unit provides notification of the combinations of the viewpoint images with high correlations (correlation pattern) to the encoder 24 and allows it to execute encoding of the viewpoint images based on the inter-frame prediction.

The encoder 24 regards the viewpoint images buffered by the viewpoint image buffer 21 and rearranged as frames arranged in the time-series sequence and encodes them according to the control from the encode control unit 23, and outputs resulting video encoded signals to the downstream.

The search unit 22 and the encode control unit 23 may be omitted and the viewpoint images may be encoded using an existing encoding method in the encoder 24.

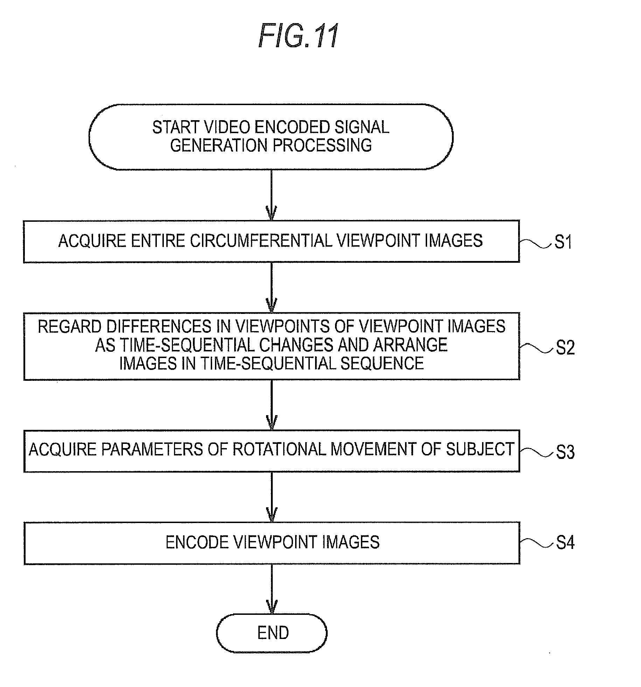

Next, Fig. 11 is a flowchart for explanation of video encoded signal generation processing by the image signal processing apparatus 20.

At step S1, the image signal processing apparatus 20 externally acquires the entire circumferential viewpoint images. The acquired entire circumferential viewpoint images are input to the viewpoint image buffer 21. At step S2, the viewpoint image buffer 21 buffers the externally input entire circumferential viewpoint images, while, as shown in Fig. 3, arranges the entire circumferential viewpoint images simultaneously imaged at the respective imaging times in a time-series sequence.

At step S3, the search unit 22 estimates the parameters of the rotational speed of the subject itself and the rotational direction thereof by referring to the images buffered in the viewpoint image buffer 21 according to the method described above using Figs. 7 and 8 and outputs them to the encode control unit 23.

At step S4, the encoder 24 regards the viewpoint images buffered by the viewpoint image buffer 21 and rearranged as frames arranged in the time-series sequence and encodes them according to the control from the encode control unit 23, and outputs resulting video encoded signals to the downstream.

As explained above, according to the video encoded signal generation processing, the entire circumferential images of the subject may be regarded as frames arranged in the time-series sequence and encoded, and efficiently supplied as video encoded signals to the downstream.

### [Configuration example and operation of entire circumference stereoscopic image display apparatus 30]

Next, Fig. 12 shows a configuration example of the entire circumference stereoscopic image display apparatus 30 to which the video encoded signals are input from the image signal processing apparatus 20.

The entire circumference stereoscopic image display apparatus 30 includes a decoder 51, a viewpoint image buffer 52, a display control unit 53, and a display unit 54.

The decoder 51 decodes the video encoded signals input from the upstream image signal processing apparatus 20 and outputs resulting viewpoint images to the viewpoint image buffer 52. The viewpoint image buffer 52 buffers the viewpoint images input from the decoder 51.

The display control unit 53 reads out the respective viewpoint images buffered in the viewpoint image buffer 52 according to a predetermined sequence and allows the display unit 54 to display them.

In the entire circumference stereoscopic image display apparatus 30, the video encoded signals are input from the upstream image signal processing apparatus 20 and decoded by the decoder 51, and resulting viewpoint images are buffered in the viewpoint image buffer 52. Then, the buffered viewpoint images are read out in the predetermined sequence and displayed in the display unit 54.

Now, the above described series of processing of the image signal processing apparatus 20 and the entire circumference stereoscopic image display apparatus 30 may be executed by hardware or software. In the case where the series of processing is executed by software, programs forming the software are installed from a program recording medium into a computer incorporated in dedicated hardware or into a general-purpose personal computer that can execute various functions with installed various programs.

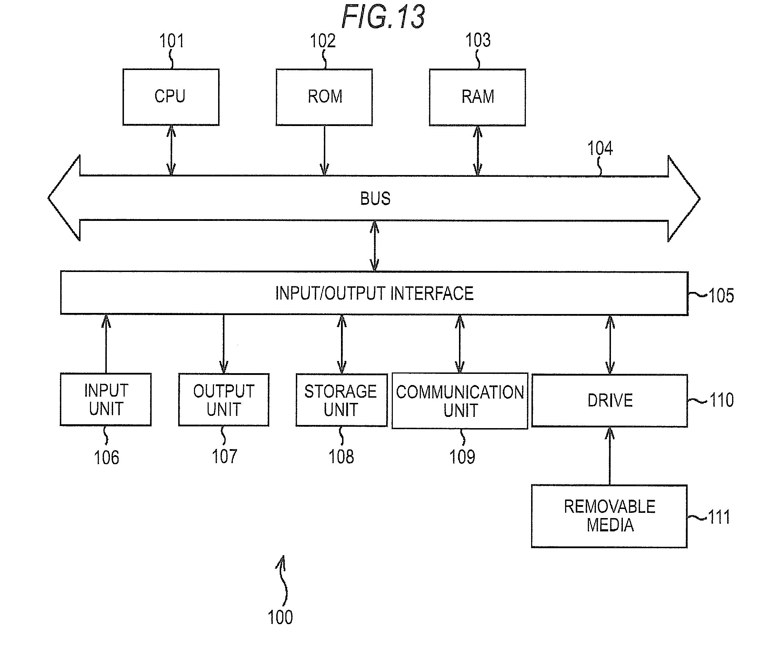

Fig. 13 is a block diagram showing a configuration example of hardware of a computer that executes the above described series of processing using programs.

In the computer 100, a CPU (Central Processing Unit) 101, a ROM (Read Only Memory) 102, a RAM (Random Access Memory) 103 are connected to one another via a bus 104.

To the bus 104, an input/output interface 105 is further connected. To the input/output interface 105, an input unit 106 including a keyboard, a mouse, a microphone, etc., an output unit 107 including a display, speakers, etc. , a storage unit 108 including a hard disk, a nonvolatile memory, etc., a communication unit 109 including a network interface etc. , a drive 110 that drives removable media 111 including a magnetic disk, an optical disc, a magneto-optical disc, a semiconductor memory, or the like are connected.

In the computer having the above configuration, the CPU 101 loads and executes the program stored in the storage unit 108, for example, in the RAM 103 via the input/output interface 105 and the bus 104, and thereby, the above described series of processing is performed.

The programs executed by the computer may be programs in which processing is performed in the time-series sequence along the sequence explained in this specification, or may be programs in which processing is performed in parallel or at necessary times when a call is made or the like.

Further, the programs may be processed by a single computer or processed in a distributed manner by plural computers. Furthermore, the programs may be transferred to a remote computer.

Moreover, in this specification, the system refers to an entire system including plural apparatuses.

The embodiments of the invention are not limited to the above described embodiments, and various changes may be made without departing from the scope of the invention.

The present application contains subject matter related to that disclosed in Japanese Priority Patent Application JP 2009-230874 filed in the Japan Patent Office on October 2, 2009.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. An image signal processing apparatus that supplies entire circumferential viewpoint images including plural viewpoint images respectively corresponding to plural viewpoints provided on a circumference around a subject to an image display apparatus that displays a stereoscopic image of the subject seen from an entire circumference, comprising:
arranging means for arranging the input entire circumferential viewpoint images in a time-series sequence by regarding corresponding differences in viewpoints as differences in an imaging sequence; and
encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals.

2. The image signal processing apparatus according to claim 1, further comprising control means for controlling the encoding means for encoding the viewpoint images using the encoding method including at least inter-frame prediction by identifying a pattern of frames with high correlations of the respective viewpoint images arranged in the time-series sequence by regarding the differences in viewpoints as differences in the imaging sequence based on parameters representing relative movement of the subject relative to the viewpoints and giving notification of the identified pattern.

3. The image signal processing apparatus according to claim 2, further comprising estimating means for estimating parameters representing the relative movement of the subject relative to the viewpoints based on the respective viewpoint images arranged in the time-series sequence by regarding the differences in viewpoints as differences in the imaging sequence, and giving notification of the estimated parameters to the control means.

4. An image signal processing method of an image signal processing apparatus that supplies entire circumferential viewpoint images including plural viewpoint images respectively corresponding to plural viewpoints provided on a circumference around a subject to an image display apparatus that displays a stereoscopic image of the subject seen from an entire circumference, comprising the steps of:
by the image signal processing apparatus,
arranging the input entire circumferential viewpoint images in a time-series sequence by regarding corresponding differences in viewpoints as differences in an imaging sequence; and
treating the respective viewpoint images arranged in the time-series sequence by regarding the differences in viewpoints as differences in the imaging sequence as single frames and encoding the viewpoint images using an encoding method including at least inter-frame prediction to generate video encoded signals.

5. A control program of an image signal processing apparatus that supplies entire circumferential viewpoint images including plural viewpoint images respectively corresponding to plural viewpoints provided on a circumference around a subject to an image display apparatus that displays a stereoscopic image of the subject seen from an entire circumference, the program allowing a computer of the image signal processing apparatus to execute processing comprising the steps of:
arranging the input entire circumferential viewpoint images in a time-series sequence by regarding corresponding differences in viewpoints as differences in an imaging sequence; and
treating the respective viewpoint images arranged in the time-series sequence by regarding the differences in viewpoints as differences in the imaging sequence as single frames and encoding the viewpoint images using an encoding method including at least inter-frame prediction to generate video encoded signals.

6. An image display apparatus that displays a stereoscopic image of a subject seen from an entire circumference based on video encoded signals input from an image signal processing apparatus including arranging means for arranging entire circumferential viewpoint images including plural viewpoint images respectively corresponding to plural viewpoints provided on a circumference around the subject in a time-series sequence by regarding corresponding differences in viewpoints as differences in an imaging sequence, and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals, comprising:
decoding means for decoding the video encoded signals input from the image signal processing apparatus and reproducing the entire circumferential viewpoint images; and
display control means for allowing a display to display the reproduced entire circumferential viewpoint images.

7. An image display method of an image display apparatus that displays a stereoscopic image of a subject seen from an entire circumference based on video encoded signals input from an image signal processing apparatus including arranging means for arranging entire circumferential viewpoint images including plural viewpoint images respectively corresponding to plural viewpoints provided on a circumference around the subject in a time-series sequence by regarding corresponding differences in viewpoints as differences in an imaging sequence, and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals, comprising the steps of:
by the image display apparatus,
decoding the video encoded signals input from the image signal processing apparatus and reproducing the entire circumferential viewpoint images; and
allowing a display to display the reproduced entire circumferential viewpoint images.

8. A control program of an image display apparatus that displays a stereoscopic image of a subject seen from an entire circumference based on video encoded signals input from an image signal processing apparatus including arranging means for arranging entire circumferential viewpoint images including plural viewpoint images respectively corresponding to plural viewpoints provided on a circumference around the subject in a time-series sequence by regarding corresponding differences in viewpoints as differences in an imaging sequence, and encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals, the program allowing a computer of the image display apparatus to execute processing comprising the steps of:
decoding the video encoded signals input from the image signal processing apparatus and reproducing the entire circumferential viewpoint images; and
allowing a display to display the reproduced entire circumferential viewpoint images.

9. An image display system comprising:
an image display apparatus that displays a stereoscopic image of a subject seen from an entire circumference; and
an image signal processing apparatus that supplies entire circumferential viewpoint images including plural viewpoint images respectively corresponding to plural viewpoints provided on a circumference around the subject to the image display apparatus,
wherein the image signal processing apparatus includes
arranging means for arranging the input entire circumferential viewpoint images in a time-series sequence by regarding corresponding differences in viewpoints as differences in an imaging sequence, and
encoding means for treating the respective viewpoint images arranged in the time-series sequence by regarding the differences in viewpoints as differences in the imaging sequence as single frames and encoding the viewpoint images using an encoding method including at least inter-frame prediction to generate video encoded signals, and
wherein the image display apparatus includes
decoding means for decoding the video encoded signals input from the image signal processing apparatus and reproducing the entire circumferential viewpoint images, and
display control means for allowing a display to display the reproduced entire circumferential viewpoint images.

10. An image signal processing apparatus that supplies entire circumferential viewpoint images including plural viewpoint images subject to an image display apparatus, comprising:
arranging means for arranging the input entire circumferential viewpoint images; and
encoding means for treating the respective viewpoint images as single frames and encoding the viewpoint images using an encoding method including at least inter-frame prediction.

11. An image signal processing apparatus that supplies entire circumferential viewpoint images including plural viewpoint images respectively corresponding to plural viewpoints provided on a circumference around a subject to an image display apparatus that displays a stereoscopic image of the subject seen from an entire circumference, comprising:
an arranging unit configured to arrange the input entire circumferential viewpoint images in a time-series sequence by regarding corresponding differences in viewpoints as differences in an imaging sequence; and
an encoding unit configured to treat the respective viewpoint images arranged in the time-series sequence by regarding the differences in viewpoints as differences in the imaging sequence as single frames and encode the viewpoint images using an encoding method including at least inter-frame prediction to generate video encoded signals.

12. An image display apparatus that displays a stereoscopic image of a subject seen from an entire circumference based on video encoded signals input from an image signal processing apparatus including an arranging unit configured to arrange entire circumferential viewpoint images including plural viewpoint images respectively corresponding to plural viewpoints provided on a circumference around the subject in a time-series sequence by regarding corresponding differences in viewpoints as differences in an imaging sequence, and an encoding unit configured to treat the respective viewpoint images arranged in the time-series sequence by regarding the differences in viewpoints as differences in the imaging sequence as single frames and encode the viewpoint images using an encoding method including at least inter-frame prediction to generate video encoded signals, comprising:
a decoding unit configured to decode the video encoded signals input from the image signal processing apparatus and reproducing the entire circumferential viewpoint images; and
a display control unit configured to allow a display to display the reproduced entire circumferential viewpoint images.

13. An image display system comprising:
an image display apparatus that displays a stereoscopic image of a subject seen from an entire circumference; and
an image signal processing apparatus that supplies entire circumferential viewpoint images including plural viewpoint images respectively corresponding to plural viewpoints provided on a circumference around the subject to the image display apparatus,
wherein the image signal processing apparatus includes
an arranging unit configured to arrange the input entire circumferential viewpoint images in a time-series sequence by regarding corresponding differences in viewpoints as differences in an imaging sequence, and
an encoding unit configured to treat the respective viewpoint images arranged in the time-series sequence by regarding the differences in viewpoints as differences in the imaging sequence as single frames and encode the viewpoint images using an encoding method including at least inter-frame prediction to generate video encoded signals, and
wherein the image display apparatus includes
a decoding unit configured to decode the video encoded signals input from the image signal processing apparatus and reproducing the entire circumferential viewpoint images, and
a display control unit configured to allow a display to display the reproduced entire circumferential viewpoint images.
